# EUROPÄISCHE PATENTSCHRIFT

(11) **EP 3 511 101 B1**
(45) Veröffentlichungstag und Bekanntmachung des Hinweises auf die Patenterteilung: **23.09.2020**
(21) Anmeldenummer: 18150954.8
(22) Anmeldetag: 10.01.2018
(51) Int. Cl.: B23F 23/00, B24B 49/12, B23F 23/12

(54) **VERFAHREN ZUM PRÜFEN EINES SCHLEIFWERKZEUGS UND ENTSPRECHENDE VORRICHTUNG**
METHOD FOR TESTING A GRINDING TOOL AND CORRESPONDING DEVICE
PROCÉDÉ DE VÉRIFICATION D'UN OUTIL DE MEULAGE ET DISPOSITIF CORRESPONDANT

(43) Veröffentlichungstag der Anmeldung: 17.07.2019
(73) Patentinhaber: Klingelnberg GmbH, 42499 Hückeswagen (DE)
(72) Erfinder: Schweizer, Martin, 76437 Rastatt (DE)
(74) Vertreter: Heusch, Christian

(56) Entgegenhaltungen:
- EP-A1- 3 231 555
- EP-A1- 3 345 707
- DE-A1- 3 827 752
- DE-A1- 10 032 498

## Beschreibung

Die Erfindung betrifft ein Verfahren zum Prüfen eines Schleifwerkzeugs und eine entsprechende Vorrichtung.

### HINTERGRUND DER ERFINDUNG

In gibt viele technische Bereiche, in denen Schleifwerkzeuge zum Einsatz kommen. Als Beispiel ist hier das Verzahnen von Zahnrädern mit Schleifscheiben, Schleiftöpfen und Schleifschnecken genannt.

Zum Teil kommen beim Verzahnen galvanisch beschichtete Schleifwerkzeuge zum Einsatz, da diese kurze Schleifzeiten ermöglichen und bei hoher Schleifabtragsleistung einen geringen Verschleiss zeigen. Solche galvanisch beschichteten Schleifwerkzeuge eignen sich daher z.B. zum Bearbeiten von Radsätzen in der Grossserienproduktion.

Die galvanisch beschichteten oder galvanisch gebundenen Schleifwerkzeuge werden hier kurz als galvanische Schleifwerkzeuge bezeichnet. Auch galvanisch gebundene Abrichtwerkzeuge (wie Abrichtrollen) werden hier als galvanische Schleifwerkzeuge bezeichnet.

Bei den galvanischen Schleifwerkzeugen, um die es hier geht, ist der Grundkörper des Schleifwerkzeugs z.B. mit Diamant-Schleifkörnern und/oder mit CBN-Schleifkömem belegt (CBN steht für Kubisches Bornitrid).

Entsprechend belegte galvanische Schleifwerkzeuge haben eine sehr gute thermische Beständigkeit und bieten eine hohe mechanische Festigkeit. Ausserdem sind sie sehr griffig. Es kann jedoch als ein Nachteil angesehen werden, dass galvanische Schleifwerkzeuge nicht abgerichtet werden können. Andererseits behalten die galvanischen Schleifwerkzeuge typischerweise ihre Form und ihr Profil. In dieser Formhaltigkeit liegt auch ein Vorteil und die galvanischen Schleifwerkzeuge werden daher gerne als Formwerkzeuge eingesetzt.

Galvanische Schleifwerkzeuge können zwar nicht abgerichtet werden, aber sie können mit einigem Aufwand wiederbelegt werden.

Es besteht der Bedarf die Formhaltigkeit von galvanischen Schleifwerkzeugen zu prüfen.

Es gibt z.B. verschiedene Messvorrichtungen, die zum taktilen Erfassen der Beschaffenheit und des Profils von Oberflächen ausgelegt sind. Typischerweise wird bei der mechanischen Abtastung eine Tastspitze über die zu vermessende Oberfläche geführt. Bei galvanischen Schleifwerkzeugen fuhrt jedoch die Körnigkeit der Oberfläche und die Härte der Diamant- oder CBN-Schleifkörner zu einer schnellen Zerstörung der Tastspitze. Verfahren zur taktilen Messung eignen sich daher nur bedingt zum Erfassen der Oberfläche von galvanischen Schleifwerkzeugen.

Es besteht der Bedarf Prüfungen von galvanischen Schleifwerkzeugen möglichst schnell und robust durchführen zu können.

Aus der DE 38 27 752 A1 ist ein Verfahren gemäß dem Oberbegriff des Anspruchs 1 und eine Vorrichtung gemäß dem Oberbegriff des Anspruchs 9 bekannt.

Es ist eine Aufgabe der Erfindung eine Vorrichtung und ein entsprechendes Verfahren bereit zu stellen, die es ermöglichen schnelle und präzise Prüfungen von galvanischen Schleifwerkzeugen vorzunehmen.

Die Aufgabe wird durch ein Verfahren gemäß Anspruch 1 und eine Vorrichtung gemäß Anspruch 9 gelöst.

Gemäß Erfindung wir ein Verfahren bereit gestellt, das zum Prüfen eines Schleifwerkzeug in einer Vorrichtung ausgelegt ist und das mindestens die folgenden Schritte umfasst:
- Drehantreiben des Schleifwerkzeugs um eine Werkzeugspindelachse der Vorrichtung,
- Durchführen eines Prüfverfahrens mittels einer optischen Prüfvorrichtung, die im Bereich des Schleifwerkzeugs so angeordnet ist, dass das Schleifwerkzeug während des Drehantreibens mindestens teilweise von Licht bestrahlt wird, das von einem Emitter der Prüfvorrichtung ausgeht, und dass mindestens ein Teil des Lichts von dem Schleifwerkzeug in Richtung eines Sensors der Prüfvorrichtung reflektiert wird, wobei der Sensor Prüfinformation bereitstellt,
- Verarbeiten der Prüfinformation mittels einer Rechenvorrichtung, um makroskopische Grundinformation in Form eines 3-dimensionalen Vektormodells des Schleifwerkzeugs zu ermitteln,
- rechnergestütztes Vergleichen des Vektormodells mit einem Soll-Vektormodell, das aus einem Speicher bereitgestellt wird, um Abweichungen zwischen den Vektormodellen zu ermitteln.

Gemäß Erfindung wir eine Vorrichtung (z.B. eine Messvorrichtung oder eine Schleifmaschine) bereitgestellt, die eine drehantreibbare Aufnahme für ein zu prüfendes Schleifwerkzeug umfasst. Die Vorrichtung zeichnet sich dadurch aus, dass sie umfasst:
- eine optische Prüfvorrichtung, die im Bereich der drehantreibbaren Aufnahme so angeordnet ist, dass das Schleifwerkzeug, während es drehangetrieben wird, mindestens teilweise von Licht bestrahlt wird, das von einem Emitter der Prüfvorrichtung (30) ausgeht, und dass mindestens ein Teil des Lichts von dem Schleifwerkzeug in Richtung eines Sensors der Prüfvorrichtung reflektierbar ist, wobei der Sensor dazu ausgelegt ist Prüfinformation bereitzustellen,
- eine Rechenvorrichtung, die zum Verarbeiten der Prüfinformation ausgelegt ist, um aus makroskopischer Grundinformation ein 3-dimensionales Vektormodell des Schleifwerkzeugs zu ermitteln,
- einen Speicher in dem ein Soll-Vektormodell gespeichert ist,
- eine Rechenvorrichtung, die zum Vergleichen des Vektormodells mit dem Soll-Vektormodell ausgelegt ist, um Abweichungen zwischen den Vektormodellen ermitteln zu können.

Bei mindestens einem Teil der Ausführungsformen definiert das 3-dimensionale Vektormodell das Schleifwerkzeug mindestens durch Kanten seines Grundkörpers.

Bei mindestens einem Teil der Ausführungsformen wird anhand des 3-dimensionalen Vektormodells mindestens eine erste Teilfläche des Schleifwerkzeugs ermittelt bzw. mathematisch genau definiert.

Eine Anwendung der Erfindung ist vor allem dann vorteilhaft, wenn es um Präzisionsschleifmittel geht, deren Formhaltigkeit für das Schleifergebnis essentiell ist.

Die Erfindung lässt sich besonders vorteilhaft auf galvanische Schleifscheiben, galvanische Schleifschnecken und galvanische Schleiftöpfe (Topfschleifscheiben) anwenden.

Bei Bedarf kann ein Algorithmus zur Kantendetektion eingesetzt werden, um das Erstellen/Ermitteln eines Vektormodells zu unterstützen.

Vorzugsweise wird das Prüfen der galvanischen Schleifwerkzeuge inline im Rahmen eines Produktionsprozesses vorgenommen. D.h. das Verfahren der Erfindung kann mindestens bei einigen Ausführungsformen innerhalb oder an einer Verzahnungsmaschine (z.B. einer Schleifmaschine) vorgenommen werden.

die makroskopische Grundinformation kann mindestens Information in Bezug auf einer oder mehrere der folgenden Größen enthalten:
- Durchmesser des Schleifwerkzeugs,
- Breite des Schleifwerkzeugs,
- Teilung und/oder Steigung des Schleifwerkzeugs,
- Profilwinkel des Schleifwerkzeugs,
- Profildicke des Schleifwerkzeugs,
- Spitzenradius des Schleifwerkzeugs.

### ZEICHNUNGEN

Ausführungsbeispiele der Erfindung werden im Folgenden unter Bezugnahme auf die Zeichnungen näher beschrieben.

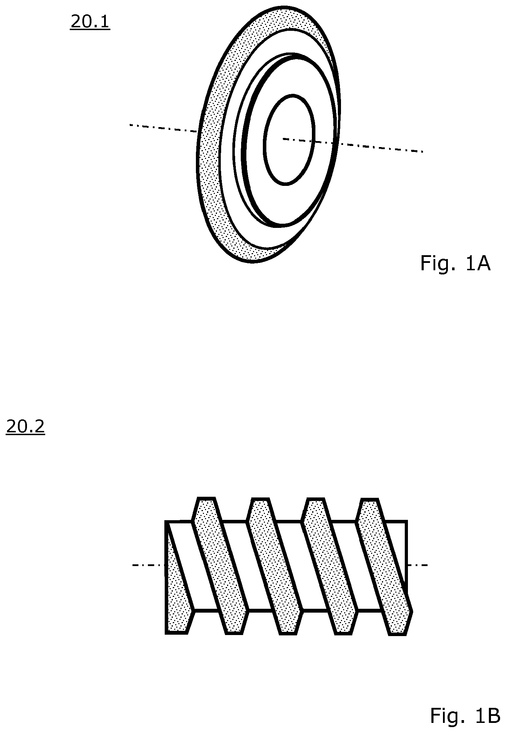

- **FIG. 1A**: zeigt eine perspektivische Ansicht eines beispielhaften ersten Schleifwerkzeugs - hier in Form einer galvanischen Schleifscheibe,
- **FIG. 1B**: zeigt eine schematische Seitenansicht eines beispielhaften zweiten Schleifwerkzeugs - hier in Form einer galvanischen Schleifschnecke,
- **FIG. 2**: zeigt in einer schematischen, beispielhaften Darstellung das Grundprinzip einer Ausführungsform der Erfindung;
- **FIG. 3A**: zeigt eine schematische Seitenansicht der oberen Hälfte einer galvanischen Schleifscheibe;
- **FIG. 3B**: zeigt eine Seitenansicht eines beispielhaften, schematisierten Vektormodells der galvanischen Schleifscheibe der Fig. 3A;
- **FIG. 4**: zeigt eine Vorderansicht eines beispielhaften, schematisierten Vektormodells einer weiteren galvanischen Schleifscheibe;
- **FIG. 5**: zeigt eine vergrößerte Vorderansicht eines beispielhaften, schematisierten Vektormodells einer weiteren galvanischen Schleifscheibe, die am Umfang eine Beschädigung aufweist;
- **FIG. 6A**: zeigt eine schematische Seitenansicht einer galvanischen Schleifschnecke;
- **FIG. 6B**: zeigt eine Seitenansicht eines beispielhaften, schematisierten Vektormodells der galvanischen Schleifschnecke der Fig. 6A;
- **FIG. 6C**: zeigt eine vergrößerte Ansicht eines Abschnitts eines beispielhaften, schematisierten Vektormodells einer galvanischen Schleifschnecke, die eine lokal "gestörte" Oberfläche aufweist;
- **FIG. 7**: zeigt eine schematische Perspektivansicht eines beispielhaften Emitters;
- **FIG. 8**: zeigt eine schematische Perspektivansicht einer beispielhaften optischen Prüfvorrichtung, die einen Kreuz-Laser umfasst;
- **FIG. 9**: zeigt eine schematische Perspektivansicht einer beispielhaften Messvorrichtung;
- **FIG. 10**: zeigt eine schematische Perspektivansicht einer beispielhaften Schleifmaschine.

### DETAILIERTE BESCHREIBUNG

Im Zusammenhang mit der vorliegenden Beschreibung werden Begriffe verwendet, die auch in einschlägigen Publikationen und Patenten Verwendung finden. Es sei jedoch angemerkt, dass die Verwendung dieser Begriffe lediglich dem besseren Verständnis dienen soll. Der erfinderische Gedanke und der Schutzumfang der Patentansprüche soll durch die spezifische Wahl der Begriffe nicht in der Auslegung eingeschränkt werden. Die Erfindung lässt sich ohne weiteres auf andere Begriffssysteme und/oder Fachgebiete übertragen. In anderen Fachgebieten sind die Begriffe sinngemäß anzuwenden.

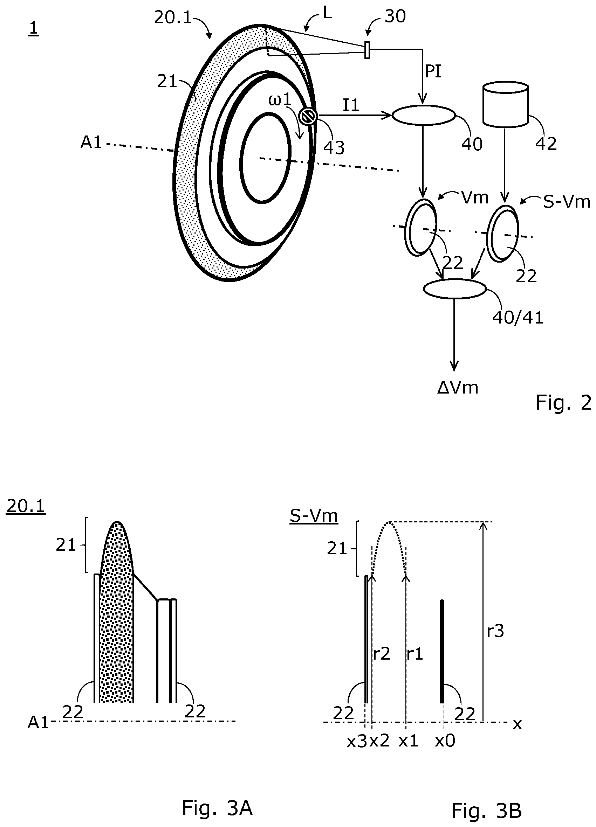

In einer ersten Ausführungsform der Erfindung, die in Fig. 2 gezeigt ist, geht es um das berührungslose, optische Prüfen eines galvanischen Schleifwerkzeugs 20, hier in Form einer galvanischen Schleifscheibe 20.1. Diese Schleifscheibe 20.1 umfasst einen ringförmigen äusseren Bereich 21, der mit Schleifkörnern belegt ist (es ist hier im ringförmigen äusseren Bereich ein Muster gezeigt, um die Körnung anzudeuten).

Der ringförmige äussere Bereich 21 wird auch als ringförmiger Profilbereich oder als aktiver Bereich bezeichnet. Der Begriff "aktiv" soll andeuten, dass dieser Bereich beim Schleifen eines Werkstücks mit diesem in mechanische Wechselwirkung tritt.

Das Verfahren zum Prüfen eines Schleifwerkzeug 20 umfasst mindestens bei einigen Ausführungsformen die folgenden Schritte:
- Drehantreiben des Schleifwerkzeugs 20 um eine Werkzeugspindelachse A1 einer Vorrichtung 1 (z.B. einer Verzahnungsmaschine, eines Verzahnungszentrums, oder einer Messvorrichtung 10),
- Durchführen eines Prüfverfahrens mittels einer optischen Prüfvorrichtung 30, die im Bereich des Schleifwerkzeugs 20 so angeordnet ist, dass das Schleifwerkzeug 20 während des Drehantreibens mindestens teilweise von Licht L bestrahlt wird, wie in Fig. 2 in rein schematischer Form angedeutet. Das erwähnte Licht L geht von einem Emitter 31 der Prüfvorrichtung 30 aus und wird auf den aktiven Bereich 21 des Schleifwerkzeugs 20 gerichtet. In Fig. 2 ist zu erkennen, dass der Emitter 31 einen linienförmigen Lichtstreifen auf dem aktiven Bereich 21 abbildet. Mindestens ein Teil des Lichts L wird von dem Schleifwerkzeug 20 in Richtung eines Sensors 32 der Prüfvorrichtung 30 reflektiert (in Fig. 2 sind weder der Emitter 31 noch der Sensor 32 gezeigt).
- Dieser Sensor 32 stellt Prüfinformation PI bereit, wie in Fig. 2 durch einen mit PI beschrifteten Pfeil dargestellt.
- Diese Prüfinformation PI wird nun mittels einer Rechenvorrichtung 40 verarbeitet, um makroskopische Grundinformation mG in Form eines 3-dimensionalen Vektormodells Vm des Schleifwerkzeugs 20 zu ermitteln.
- Dann wird das Vektormodell Vm mit einem Soll-Vektormodell S-Vm verglichen (was z.B. durch dieselbe Rechenvorrichtung 40 oder durch eine andere Rechenvorrichtung 41 erfolgen kann). Das Soll-Vektormodell S-Vm kann z.B. aus einem Speicher 42 bereitgestellt werden, wie in Fig. 2 angedeutet. Der Vergleich wird so durchgeführt, dass Abweichungen ΔVm zwischen den Vektormodellen Vm und S-Vm mathematisch ermittelt werden können.

In Fig. 2 ist angedeutet, dass während des Drehantreibens des Schleifwerkzeugs 20.1 Winkel- und/oder Geschwindigkeitsinformation I1 (z.B. ω1) mittels eines Sensors 43 erfasst wird. Diese Winkel- und/oder Geschwindigkeitsinformation I1 wird zusammen mit der Prüfinformation PI von der Rechenvorrichtung 40 verarbeitet, um das 3-dimensionalen Vektormodells Vm des Schleifwerkzeugs 20.1 zu ermitteln. In Fig. 2 ist dieses Modell Vm in Form eines kleinen Abbildes des Schleifwerkzeugs 20.1 dargestellt. Da es hier primär um das Prüfen des aktiven Bereichs des Schleifwerkzeugs 20.1 geht, umfasst das 3-dimensionale Vektormodell Vm z.B. lediglich zwei parallele, kreisförmige Stirnflächen 22 und eine Abbildung des aktiven Bereichs 21.

Das Soll-Vektormodell S-Vm, das z.B. ein ideal geformtes, nicht abgenutztes Schleifwerkzeug 20.1 definiert, ist entsprechend aufgebaut wie das 3-dimensionale Vektormodell Vm. Daher ist in Fig. 2 ein weiteres kleines Abbild mit dem Bezugszeichen S-Vm gezeigt. Eine Rechenvorrichtung 40 oder 41 kann nun die beiden Modelle Vm und S-Vm rechnerisch miteinander vergleichen. Wie in Fig. 2 angedeutet, ergibt sich aus diesem Vergleich eine Abweichung, die hier mit ΔVm bezeichnet ist. Diese Abweichung ΔVm ist berechenbar.

Ein Vektormodell ist im Sinne der Erfindung eine mathematische Beschreibung eines Körpers im 3-dimensionalen Raum. Dazu bedarf es eines Bezugssystems, das hier als Koordinatensystem bezeichnet wird. Ein Vektormodell umfasst im Wesentlichen Linien und Punkte. Bei einem einfachen 3-dimensionalen Körper, wie z.B. einem Quader, umfasst das entsprechende Vektormodell die Vektoren der 12 Kanten des Quaders. Flächen eines 3-dimensionalen Körpers werden durch einen geschlossenen Linienzug umgeben.

Das Vektormodell ist im Sinne der Erfindung somit eine mathematische Darstellung der linienhaften, geometrischen Strukturen des zu beschreibenden Körpers. Die linienhaften, geometrischen Strukturen können bei allen Ausführungsformen z.B. durch eine Aufeinanderfolge von Punkten sowie den Abständen zwischen diesen Punkten beschrieben werden.

Vorzugsweise kommt bei mindestens einem Teil der Ausführungsformen ein topologisches Vektormodell zum Einsatz, das auch Angaben zur räumlichen Beziehung der Punkte und/oder Linien umfasst.

Vorzugsweise kommt bei mindestens einem Teil der Ausführungsformen ein topologisches Vektormodell zum Einsatz, das neben den Linien und Punkten auch Kreise und Kurven umfasst, um so auch komplexere 3-dimensionale Körper einfacher im Vektormodell abbilden zu können.

Vorzugsweise kommt bei mindestens einem Teil der Ausführungsformen ein topologisches Vektormodell zum Einsatz, bei dem jeder Vektor durch eindeutige Koordinaten dargestellt ist.

Die gerade Kante eines 3-dimensionalen Körpers wird z.B. durch die beiden begrenzenden Punkte und durch die gerade Verbindungslinie definiert. Ein Kreis kann z.B. durch den Kreismittelpunkt und den Radius definiert werden.

Das Vektormodell umfasst im Sinne der Erfindung auch sogenannte Rastermodelle, bei denen Flächen in regelmäßige Raster oder Maschen unterteilt sind. Ein solches Rastermodell umfasst somit zusätzlich zu den Vektoren, die zur mathematischen Beschreibung der Kanten dienen, eine rasterartige Unterteilung von Flächen.

Eine Schleifscheibe 20.1, wie sie in Fig. 2 schematisch dargestellt hat, umfasst typischerweise den bereits erwähnten ringförmigen Randbereich 21 (auch Profilbereich genannt), der mit Schleifkörnern belegt ist. Da es hier primär um ein 3-dimensionales Vektormodell Vm des Schleifwerkzeugs 20 geht, kann sich das Vektormodell Vm auf die Beschreibung des ringförmigen Profilbereichs 21 konzentrieren, wobei jedoch auch die Lage der Werkzeugspindelachse A1 von Bedeutung ist, da diese Werkzeugspindelachse A1 zur Definition des Bezugssystems genutzt werden kann.

In Fig. 2 sind rechts neben dem Abbild der Schleifscheibe 20.1 das Vektormodel Vm der Schleifscheibe 20.1 und das Soll-Vektormodell S-Vm in Form kleiner Abbildungen nebeneinander gezeigt. Anhand dieser kleinen Abbildungen kann man erkennen, dass die entsprechenden Vektormodelle z.B. je durch zwei kreisförmige Stirnflächen 22 beschrieben werden können (hier ist jedoch jeweils nur die vordere Stirnfläche 22 zu erkennen), die konzentrisch zur Werkzeugspindelachse A1 liegen und deren gegenseitiger Abstand die Dicke des Profilbereichs der Schleifscheibe 20.1 festlegen.

Der Profilbereich 21 selbst kann durch eine Menge an Kreisen beschrieben werden, deren Mittelpunkte allesamt auf der Werkzeugspindelachse A1 liegen. Jeder dieser Kreise kann einen anderen Durchmesser und einen anderen relativen Abstand z.B. zur vorderen kreisförmigen Stirnfläche 22 haben. Bei einer idealen Schleifscheibe 20.1 sind alle diese Kreise der Menge an Kreisen absolut kreisrund (wenn man auf mikroskopischer Ebene die Körnigkeit der Schleifkörner unberücksichtigt lässt). Das Soll-Vektormodell S-Vm kann somit z.B. durch eine Menge an Kreisen, durch den Durchmesser dieser Kreise und durch den relativen Abstand (gemessen parallel zur Werkzeugspindelachse A1) definiert werden.

Eine reale Schleifscheibe 20.1, die z.B. eine Unwucht aufweist, umfasst z.B. einen oder mehrere deformierte Kreise.

Ein rechnerischer Vergleich des Soll-Vektormodells S-Vm mit dem 3-dimensionalen Vektormodell Vm des realen Schleifwerkzeugs 20.1, würde diese Abweichung (die sich durch die Unwucht ergibt) des Ist-Zustands gegenüber dem Soll-Zustand zeigen.

Ein solcher rechnerischer Vergleich kann bei mindestens einem Teil der Ausführungsformen z.B. mittels mathematischer Vektorberechnungen durchgeführt werden.

Fig. 3A zeigt eine schematische Seitenansicht der oberen Hälfte einer galvanischen Schleifscheibe 20.1. Diese Schleifscheibe 20.1 umfasst im gezeigten Beispiel Halter und Gegenhalter, die eine rechte und eine linke Stirnfläche 22 definieren. Diese Stirnflächen 22 stehen senkrecht zur Werkzeugspindelachse A1. Zwischen dem Halter und Gegenhalter sitzt der Grundkörper der galvanischen Schleifscheibe 20.1, der mindestens im ringförmigen Profilbereich 21 mit Schleifkörnern belegt ist. Der Einfachheit halber hat der Profilbereich 21 hier ein symmetrisches, parabetartiges Profil.

Fig. 3B zeigt eine Seitenansicht eines beispielhaften, schematisierten Soll-Vektormodells S-Vm der galvanischen Schleifscheibe 20.1 der Fig. 3A. Die x-Achse fällt hier mit der Werkzeugspindelachse A1 zusammen. Diese x-Achse dient bei diesem Beispiel als Bezugsachse, die zur Definition der Vektoren des Vektormodells dient. An der Position x0 liegt die rechte Stirnfläche 22. An der Position x3 liegt die linke Stirnfläche 22. Zwischen diesen beiden begrenzenden Flächen 22 liegt der ringförmige Profilbereich 21. Das parabelförmige Profil, das zuvor erwähnt wurde, wird in diesem beispielhaften Vektormodel durch eine Menge von Kreisen dargestellt. Wie man in Fig. 3B erkennen kann, setzt sich daher das parabelförmige Profil aus einer grossen Anzahl an Punkten zusammen. Jeder dieser Punkte steht für den Schnittpunkt eines der Kreise durch die Zeichenebene. Jedem einzelnen Kreis der Menge von Kreisen kann eine x-Koordinate auf der x-Achse und ein Radius zugeordnet werden. Dadurch ist jeder der Kreise eineindeutig im Bezugssystem der x-Achse definiert.

Da das Profil symmetrisch ist, sind die beiden Radien r1 an der Position x1 und r2 an der Position x2 gleich lang. Dies ist jedoch ein Sonderfall. Der oberste Punkt des parabelförmigen Profils (dort liegt der maximale Durchmesser der galvanischen Schleifscheibe 20.1) hat hier einen Radius r3.

Ein solches Soll-Vektormodell S-Vm kann jetzt rechnerisch mit dem optisch gemessenen Vektormodell Vm einer gebrauchten galvanischen Schleifscheibe 20.1 verglichen werden. Ein solcher rechnerischer Vergleich ist dann besonders einfach, wenn beide Modelle S-Vm und Vm dasselbe Bezugssystem (z.B. die x-Achse) verwenden. Die beiden Vektormodelle S-Vm und Vm können z.B. mathematisch im Form je einer Matrix dargestellt werden. Wenn man diese beiden Matrizen subtrahiert, erhält man die Abweichungen ΔVm.

Falls die beide Modelle S-Vm und Vm unterschiedliche Bezugssysteme haben, so kann vor dem Vergleich eine Koordinatentransformation durchgeführt werden, um beide Modelle S-Vm und Vm in dasselbe Bezugssystem zu überführen.

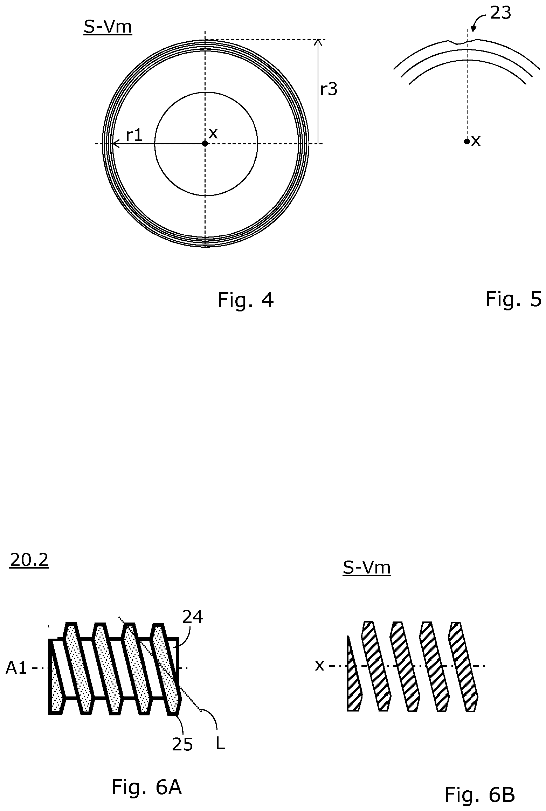

Fig. 4 zeigt eine schematische Vorderansicht des Vektormodells S-Vm einer weiteren galvanischen Schleifscheibe 20.1. Dieses Vektormodell S-Vm umfasst, wie bereits anhand des Beispiels der Fig. 3B beschrieben, eine Menge an Kreisen, die konzentrisch zur Werkzeugspindelachse A1 liegen (auch bei diesem Modell fallen die Achsen A1 und x zusammen). Bei dem in Fig. 4 gezeigten Beispiel (wie auch in Fig. 3B) sind die Abstände zwischen den einzelnen Kreisen äquidistant. Um die Darstellung in Fig. 4 nicht zu überfrachten, sind hier lediglich 6 Kreise gezeigt. Jeder dieser Kreise ist wiederum durch eine Position auf der x-Achse und durch einen Radius definiert. Der innerste Kreis hat einen Radius r1 und der äusserste Kreis hat einen Radius r3.

Fig. 5 zeigt eine schematische Vorderansicht nur eines Abschnitts eines Vektormodells Vm einer realen galvanischen Schleifscheibe 20.1, die hier am Umfang eine deutliche Beschädigung 23 aufweist. Zwei der drei Kreisbögen haben eine ideale, kreisrunde Form. Der äusserste Kreisbogen weist hingegen eine Abweichung gegenüber dem Vektormodell S-Vm auf. Bei einem rechnerischen Vergleich, der z.B. mittels Matrixoperationen vorgenommen werden kann, würde sich als Ergebnis die Abweichung ΔVm ergeben.

Anhand der Fig. 5 ist ein Beispiel beschrieben worden, bei dem eine galvanische Schleifscheibe 20.1 eine Beschädigung aufweist. Anhand der Figuren 6A bis 6C wird nun ein Beispiel beschrieben, bei dem sich ein Bereich einer galvanischen Schleifschnecke 20.2 zugesetzt hat.

Fig. 6A zeigt eine galvanische Schleifschnecke 20.2. Diese Schleifschnecke 20.2, die hier in stark schematisierter Form gezeigt ist, umfasst einen zylindrischen Grundkörper 24, der mit einem umlaufenden Zahn 25 versehen ist. Mindestens die Flanken des Zahnes 25 sind mit Schleifkörnern belegt, wie in Fig. 6A angedeutet. Wenn man davon ausgeht, dass diese Schleifschnecke 20.2 so eingesetzt wird, dass nur die Flanken des Zahnes 25 zum Bearbeiten eines Werkstücks dienen, dann reicht es aus, wenn die optische Abtastung durch die optische Prüfvorrichtung 30 so ausgelegt und ausgerichtet ist, dass nur der Zahn 25 Licht L in Richtung des Sensors 32 der Prüfvorrichtung 30 reflektiert. In Fig. 6A ist der auf die Schleifschnecke 20.2 gerichtete Lichtstrahl L (respektive das Strahlenbündel) durch eine schräg angestellte Linie dargestellt. Während des optischen Abtastens mit dem Lichtstrahl L, wird die Schleifschnecke 20.2 um die Achse A1 gedreht. Um die gesamte Breite der Schleifschnecke 20.2 abtasten zu können, kann eine Relativbewegung (Shiftbewegung) zwischen der Prüfvorrichtung 30 und der Schleifschnecke 20.2 zum Einsatz kommen.

Fig. 6B zeigt beispielhaft und in rein schematischer Form ein mögliches Soll-Vektormodell S-Vm der galvanischen Schleifschnecke 20.2 der Fig. 6A. Die x-Achse fällt hier wieder mit der Achse A1 zusammen. Durch das Abtasten mit der optischen Prüfvorrichtung 30 wurde der Zahn 25 in eine Menge parallel verlaufender Linien "unterteilt". Jede dieser Linien ist als Vektor in einem Bezugsystem (z.B. in Bezug zur x-Achse) mathematisch definiert. Auch können zusätzlich die Kanten des Zahnes 25 durch Vektoren beschrieben werden, falls dies erwünscht ist. In Fig. 6B sind daher die Kanten als Umrisse des Zahnes 25 angedeutet.

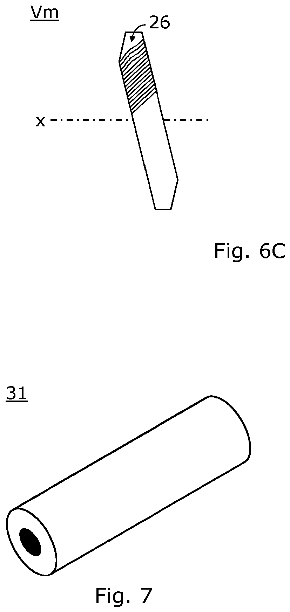

Fig. 6C zeigt beispielhaft und in rein schematischer Form ein mögliches Vektormodell Vm nur eines Bereichs der galvanischen Schleifschnecke 20.2 der Fig. 6A. Es sind in dieser Figur nur einige der parallel verlaufenden Vektoren der Menge an Vektoren gezeigt. In einem Bereich liegt eine Störung 26 vor. Diese Störung 26 ist dadurch zu erkennen, dass die ansonsten parallel verlaufenden Vektoren lokale Abweichungen zeigen. Ein Vektor im Bereich der Störung 26 kann z.B. durch einen Polygonenzug statt durch eine durgängige, gerade verlaufende Linie dargestellt werden.

Wenn nun das Vektormodell Vm der Fig. 6C mit dem Soll-Vektormodell S-Vm der Fig. 6B überlagert wird (z.B. im Rahmen eines rechnerischen Vergleichs), können derartige Abweichungen ermittelt werden.

Bei den schematischen Darstellungen der verschiedenen Figuren ist zu beachten, dass der Emitter 31 ein Lichtbündel erzeugt, das einer geraden Linie folgt (oder beim Kreuz-Laser zwei gerade Linien, die Senkrecht zueinander stehen). Wenn man das Werkstück jedoch aus einem anderen Blickwinkel betrachtet (z.B. aus der Position des Sensors 32) so ist festzustellen, dass die Lichtlinie durch die Geometrie des Werkstücks deformiert wird. Diese Art der Deformation ist nicht in den Figuren gezeigt, um die Darstellung nicht zu verkomplizieren.

Anstatt Kreise zur Definition der Modelle S-Vm, Vm zu verwenden, können zum Beispiel auch Polygonenzüge aus einer Menge von kurzen (idealerweise gleichlangen) Vektoren verwendet werden, die z.B. wie Sekanten im Kreis oder Tangenten am Kreis anliegen. Wenn man einen Kreis z.B in 360 gleichgrosse Winkelsegmente unterteilt, dann kann der entsprechende Kreis in 360 kurze Vektoren zerlegt werden. Jeder dieser Vektoren hat dann denselben Radius gegenüber einer zentralen Bezugsachse, die gleiche Länge und einen unterschiedlichen Winkelwert.

Vorzugsweise kommt bei allen Ausführungsformen ein Linien-Laser als Emitter 31 zu Einsatz. Die Linienlänge, die durch das von dem Emitter 31 ausgestrahlte Licht L erzeugt wird, kann man aus dem Öffnungswinkel des Linien-Lasers und dem Abstand zur abzutastenden Oberfläche des Werkstücks ermitteln. Wenn der Linien-Laser einen Öffnungswinkel von z.B. 90 Grad aufweist, dann entspricht die zu erzeugende Linienlänge dem zweifachen Laserabstand.

Fig. 7 zeigt beispielhaft einen zylinderförmigen Linien-Laser, der als Emitter 31 geeignet ist. Die Apertur des Lasers, an der der Lichtstrahl austritt, ist hier schwarz dargestellt.

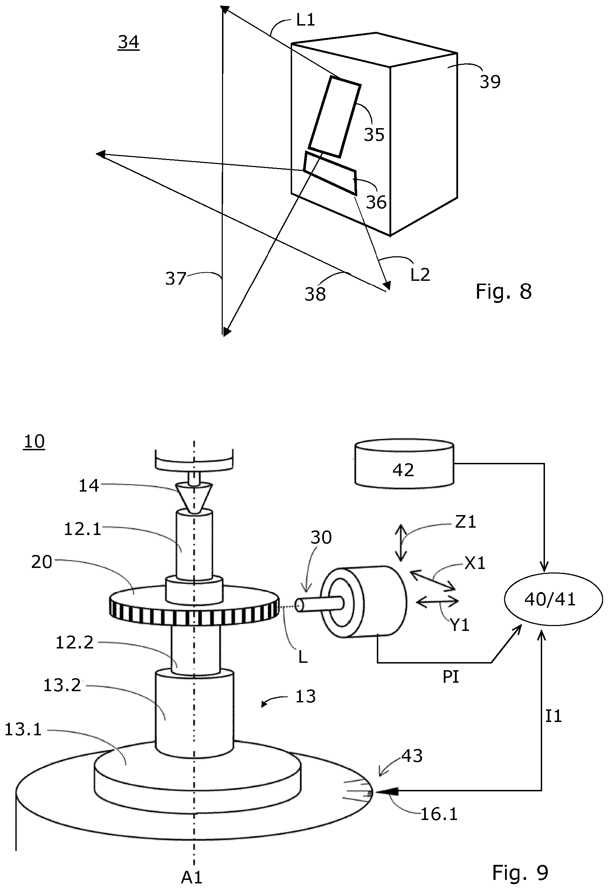

Statt eines Linien-Lasers, kann bei allen Ausführungsformen auch ein Kreuz-Laser zum Einsatz kommen, der statt einer Lichtlinie ein Lichtkreuz aus zwei sich kreuzenden Linien auf dem Werkstück abbildet. In Fig. 8 sind die beiden optischen Aperturen 35, 36 eines beispielhaften Kreuz-Lasers 34 gezeigt. Die obere Apertur 35 ist dazu ausgelegt ein vertikales Lichtbündel L1 auszustrahlen. Die untere Apertur 36 ist dazu ausgelegt ein horizontales Lichtbündel L2 auszustrahlen. Das Lichtbündel L1 erzeugt auf dem Werkstück eine erste Lichtlinie 37 und das Lichtbündel L2 erzeugt eine zweite Lichtlinie 38. Damit können in einem Durchgang des Abtastens senkrecht zueinander stehende Vektoren ermittelt werden. In einem solchen Fall umfassen die entsprechenden Vektormodelle ein Raster aus sich kreuzenden Linien. Der Kreuz-Laser 34 kann z.B. zwei orthogonal angebrachte Spiegel umfassen, um die beiden Lichtbündel L1, L2 abzustrahlen.

Statt eines Linien-Lasers oder Kreuz-Lasers kann bei allen Ausführungsformen auch ein Rotations-Laser (z.B. mit sich bewegender Spiegelanordnung) zum Einsatz kommen.

Vorzugsweise kommt bei allen Ausführungsformen eine Detektorgruppe aus lichtempfindlichen Elementen (z.B. Photodioden oder Phototransistoren) als Sensor 32 zum Einsatz. Eine Detektorgruppe kann z.B. eine lineare Anordnung mehrerer lichtempfindlicher Elemente umfassen.

Vorzugsweise kommt bei allen Ausführungsformen ein Laser als Emitter 31 zum Einsatz, dessen Lichtstrahl moduliert (z.B. gepulst) ist, um die Empfindlichkeit durch Störlicht und störende Reflektionen zu reduzieren. In diesem Fall müssen Emitter 31 und Sensor 32 aufeinander abgestimmt sein, was die Modulationsart anbelangt.

Bei allen Ausführungsformen kann der Aufbau der optischen Prüfvorrichtung 30 so gewählt sein, dass der Emitter 31 und der Detektor 32 den gleichen optischen Strahlengang senden und empfangen. Es ist auch möglich die optische Prüfvorrichtung 30 so aufzubauen, dass der Emitter 31 und der Detektor 32 mit unterschiedlichen optischen Strahlengängen arbeiten.

Gemäß Erfindung wird bei mindestens einem Teil der Ausführungsformen das Werkstück optisch abgetastet und dann rechnerisch im 3-dimensionalen Raum in Form eines Vektormodells Vm rekonstruiert.

Bei mindestens einem Teil der Ausführungsformen kann die Prüfinformation PI mit einem Algorithmus zur Kantendetektion aufbereitet werden. Dabei werden Bildpunkte, die auf einem Linienzug oder Polygonzug liegen, mathematisch durch einen entsprechenden Vektor oder durch eine entsprechende Aneinanderreihung von Vektoren definiert. Gleichzeitig oder zusätzlich können andere Bildpunkte (wie z.B. einzelne Bildstörungen) unterdrückt wurden.

In Fig. 9 ist ein Teilbereich einer (Koordinaten-)Messvorrichtung 10 gezeigt. Diese Messvorrichtung 10, die hier auch allgemein als Vorrichtung 1 bezeichnet wird, umfasst mindestens eine drehantreibbare Aufnahme 13, 14 für ein zu prüfendes Schleifwerkzeug 20. Hier ist eine Schleifscheibe 20.1 in Form einer dünnen Zylinderscheibe gezeigt. Die vertikalen Striche entlang des Umfangs der dünnen Zylinderscheibe sollen die linienförmige Abtastung durch einen Linienlaser darstellen.

Die drehantreibbare Aufnahme 13, 14 umfasst einen (Dreh-)Tisch 13.1 mit einer Spindel oder Aufnahme 13.2 für das Schleifwerkzeug 20. Optional kann ein mitlaufendes Zentriermittel 14 zum Einsatz kommen, das als Gegenlager dient. Um die Schleifscheibe 20.1 einspannen zu können, wurde sie im gezeigten Beispiel mit zwei Wellenstümpfen 12.1, 12.2 versehen, die gegeneinander verschraubt sind. Rechts ist in Fig. 9 die optische Prüfvorrichtung 30 zu erkennen. Hier ist ein Lichtstrahl L gezeigt, der in Richtung der Schleifscheibe 20.1 abgestrahlt und von dort reflektiert wird. Der Sensor 32 und der Emitter 31 sitzen im Inneren des Gehäuses der Prüfvorrichtung 30. Die Doppelpfeile mit den Achsbezeichnungen X1, Y1 und Z1 neben der Prüfvorrichtung 30 sollen andeuten, dass die (Koordinaten-)Messvorrichtung 10 dazu ausgelegt ist eine Relativbewegung der Schleifscheibe 20.1 relativ zur Prüfvorrichtung 30 vorzunehmen.

Im Bereich des (Dreh-)Tischs 13.1 kann ein Sensor 43 (hier ein Winkeldekoder) vorgesehen sein, um entsprechende Winkel- oder Rotationsinformation I1 an einen Rechner 40/41 zu übermitteln. Die Prüfvorrichtung 30 liefert die Prüfinformation PI und das Soll-Vektormodell S-Vm wird von einem Speicher 42 bereit gestellt.

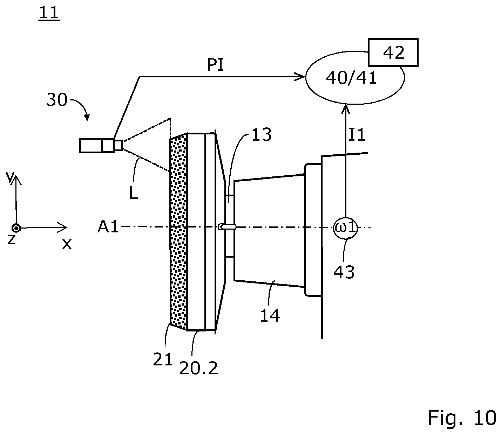

In Fig. 10 ist ein Teilbereich einer Schleifmaschine 11 gezeigt. Diese Schleifmaschine 11, die hier auch allgemein als Vorrichtung 1 bezeichnet wird, umfasst mindestens eine drehantreibbare Aufnahme 13, 14 für ein zu prüfendes Schleifwerkzeug 20 (hier ist eine Topfschleifscheibe 20.3 gezeigt). Die Vorrichtung 1 bzw. Schleifmaschine 11 umfasst zusätzlich:
- eine optische Prüfvorrichtung 30, die im Bereich der drehantreibbaren Aufnahme 13, 14 so angeordnet ist, dass das Schleifwerkzeug 20.3, während es drehangetrieben wird, mindestens teilweise von Licht L bestrahlt wird, das von einem Emitter 31 der Prüfvorrichtung 30 ausgeht. Wien in Fig. 10 gezeigt, wird mindestens ein Teil des Lichts L von dem Schleifwerkzeug 20.3 zurück in Richtung eines Sensors 32 der Prüfvorrichtung 30 reflektiert. Der Sensor 32 ist dazu ausgelegt Prüfinformation PI bereitzustellen.
- Es kommt eine Rechenvorrichtung 40/41 zum Einsatz, die zum Verarbeiten der Prüfinformation PI ausgelegt ist, um aus makroskopischer Grundinformation mG ein 3-dimensionales Vektormodell Vm des Schleifwerkzeugs 20.3 zu ermitteln.
- Außerdem ist ein Speicher 42 vorhanden, in dem ein Soll-Vektormodell S-Vm gespeichert ist.
- Es kommt eine Rechenvorrichtung 40/41 zum Einsatz, die zum Vergleichen des Vektormodells Vm mit dem Soll-Vektormodell S-Vm ausgelegt ist, um Abweichungen ΔVm zwischen den Vektormodellen Vm, S-Vm rechnerisch ermitteln zu können.

**Bezugszeichen:**

| | |
|---|---|
| Vorrichtung | 1 |
| (Koordinaten-)Messvorrichtung | 10 |
| Schleifmaschine | 11 |
| Wellenstümpfe | 12.1, 12. |
| Aufnahme | 13, 14 |
| (Dreh-)Tisch | 13.1 |
| Spindel oder Aufnahme | 13.2 |
| | |
| Schleifwerkzeug | 20, 20.1, 20.2, 20.3 |
| ringförmiger äußerer / ringförmiger Profilbereich / aktiver Bereich | 21 |
| Stirnflächen | 22 |
| Beschädiqunq | 23 |
| Grundkörper | 24 |
| Zahn / Zähne | 25 |
| Störung | 26 |
| | |
| optische Prüfvorrichtung | 30 |
| Emitter | 31 |
| Sensor | 32 |
| Linien-Laser | 33 |
| Kreuz-Laser | 34 |
| Aperturen | 35, 36 |
| Licht-Linien | 37, 38 |
| Gehäuse | 39 |
| | |
| Rechenvorrichtung / Rechner | 40 |
| Rechenvorrichtung / Rechner | 41 |
| Speicher | 42 |
| Sensor | 43 |
| | |
| Werkzeugspindelachse | A1 |
| Information | I1 |
| Abweichungen | ΔVm |
| Licht / Strahlengang | L |
| Lichtbündel | L1, L2 |
| Prüfinformation | PI |
| Radien | r1, r2, r3 |
| Soll-Vektormodell | S-Vm |
| Achsen | X1, Y1, Z1, A1 |
| Koordinatenachse/Bezugsachse | x |
| Koordinatensystem | x, y, z |
| Vektormodell | Vm |
| Drehbewequnq | ω1 |

## Patentansprüche

1. Verfahren zum Prüfen eines Schleifwerkzeug (20) in einer Vorrichtung (1), umfassend die Schritte:
- Drehantreiben des Schleifwerkzeugs (20) um eine Werkzeugspindelachse (A1) der Vorrichtung (1),
- Durchführen eines Prüfverfahrens mittels einer optischen Prüfvorrichtung (30), die im Bereich des Schleifwerkzeugs (20) so angeordnet ist, dass das Schleifwerkzeug (20) während des Drehantreibens mindestens teilweise von Licht (L) bestrahlt wird, das von einem Emitter (31) der Prüfvorrichtung (30) ausgeht, und dass mindestens ein Teil des Lichts (L) von dem Schleifwerkzeug (20) in Richtung eines Sensors (32) der Prüfvorrichtung (30) reflektiert wird, wobei der Sensor (32) Prüfinformation (PI) bereitstellt, **gekennzeichnet durch**
- Verarbeiten der Prüfinformation (PI) mittels einer Rechenvorrichtung (40), um makroskopische Grundinformation (mG) in Form eines 3-dimensionalen Vektormodells (Vm) des Schleifwerkzeugs (20) zu ermitteln,
- rechnergestütztes Vergleichen des Vektormodells (Vm) mit einem Soll-Vektormodell (S-Vm), das aus einem Speicher (42) bereitgestellt wird, um Abweichungen (ΔVm) zwischen den Vektormodellen (Vm, S-Vm) zu ermitteln.

2. Verfahren nach Anspruch 1, **dadurch gekennzeichnet, dass** die makroskopische Grundinformation mindestens Information in Bezug auf einer oder mehrere der folgenden Größen enthält:
- Durchmesser des Schleifwerkzeugs (20),
- Breite des Schleifwerkzeugs (20),
- Teilung und/oder Steigung des Schleifwerkzeugs (20),
- Profilwinkel des Schleifwerkzeugs (20),
- Profildicke des Schleifwerkzeugs (20),
- Spitzenradius des Schleifwerkzeugs (20).

3. Verfahren nach Anspruch 1 oder 2, **dadurch gekennzeichnet, dass** das 3-dimensionale Vektormodell (Vm) das Schleifwerkzeug (20) mindestens durch seinen Grundkörper (24) definiert.

4. Verfahren nach Anspruch 1 oder 2, **dadurch gekennzeichnet, dass** das 3-dimensionale Vektormodell (Vm) das Schleifwerkzeug (20) mindestens durch Kanten seines Grundkörpers (24) definiert.

5. Verfahren nach einem der Ansprüche 1 bis 4, **dadurch gekennzeichnet, dass** anhand des 3-dimensionalen Vektormodells (Vm) mindestens eine erste Teilfläche des Schleifwerkzeugs (20) ermittelt wird, um dann diese erste Teilfläche des Schleifwerkzeugs (20) mit einer entsprechenden ersten Teilfläche des Soll-Vektormodells (S-Vm) in Bezug zu setzen.

6. Verfahren nach Anspruch 5, **dadurch gekennzeichnet, dass** durch das in Bezug Setzen eine lokale Abweichung der erste Teilfläche des Schleifwerkzeugs (20) von der entsprechenden ersten Teilfläche des Soll-Vektormodells (S-Vm) berechnet wird.

7. Verfahren nach einem der Ansprüche 1 bis 6, **dadurch gekennzeichnet, dass** es sich bei dem Schleifwerkzeug (20) um ein galvanisch beschichtetes Schleifwerkzeug, insbesondere eine galvanische Schleifscheibe (20.1) oder eine galvanische Schleifschnecke (20.2) oder ein galvanischer Schleiftopf (20.3), handelt.

8. Verfahren nach einem der Ansprüche 1 bis 7, **dadurch gekennzeichnet, dass** es in einer Schleifmaschine, die zum schleifenden Bearbeiten eines Werkstücks mit dem Schleifwerkzeug (20) ausgelegt ist, oder in einer Messvorrichtung (10) eingesetzt wird.

9. Vorrichtung (1) mit einer drehantreibbaren Aufnahme (13, 14) für ein zu prüfendes Schleifwerkzeug (20), wobei die Vorrichtung (1) umfasst:
- eine optische Prüfvorrichtung (30), die im Bereich der drehantreibbaren Aufnahme (13, 14) so angeordnet ist, dass das Schleifwerkzeug (20), während es drehangetrieben wird, mindestens teilweise von Licht (L) bestrahlt wird, das von einem Emitter (31) der Prüfvorrichtung (30) ausgeht, und dass mindestens ein Teil des Lichts (L) von dem Schleifwerkzeug (20) in Richtung eines Sensors (32) der Prüfvorrichtung (30) reflektierbar ist, wobei der Sensor (32) dazu ausgelegt ist Prüfinformation (PI) bereitzustellen, **gekennzeichnet durch**
- eine Rechenvorrichtung (40), die zum Verarbeiten der Prüfinformation (PI) ausgelegt ist, um aus makroskopischer Grundinformation (mG) ein 3-dimensionales Vektormodell (Vm) des Schleifwerkzeugs (20) zu ermitteln,
- einen Speicher (42) in dem ein Soll-Vektormodell (S-Vm) gespeichert ist,
- eine Rechenvorrichtung (40), die zum Vergleichen des Vektormodells (Vm) mit dem Soll-Vektormodell (S-Vm) ausgelegt ist, um Abweichungen (ΔVm) zwischen den Vektormodellen (Vm, S-Vm) ermitteln zu können.

10. Vorrichtung (1) nach Anspruch 9, **dadurch gekennzeichnet, dass** es sich um eine Koordinaten-Messvorrichtung (10) handelt, die zum Prüfen des Schleifwerkzeugs (20) ausgelegt ist.

11. Vorrichtung (1) nach Anspruch 9, **dadurch gekennzeichnet, dass** es sich um eine Schleifmaschine (11) handelt, die zum schleifenden Bearbeiten eines Werkstücks mit dem Schleifwerkzeug (20) und zum Prüfen des Schleifwerkzeugs (20) ausgelegt ist.

## Claims

1. Method for testing an abrasive tool (20) in an apparatus (1), comprising the steps of:
- rotary driving the grinding tool (20) about a tool spindle axis (A1) of the apparatus (1),
- performing a test method by means of an optical testing apparatus (30) which is arranged in the region of the grinding tool (20) in such a way that the grinding tool (20) is at least partially irradiated during the rotary driving by light (L) which emanates from an emitter (31) of the testing apparatus (30), and that at least part of the light (L) is reflected by the grinding tool (20) in the direction of a sensor (32) of the testing apparatus (30), wherein the sensor (32) provides test information (PI),
**characterized by**
- processing the test information (PI) by means of a computing device (40) in order to determine macroscopic basic information (mG) in the form of a 3-dimensional vector model (Vm) of the grinding tool (20),
- computer-aided comparison of the vector model (Vm) with a target vector model (S-Vm) provided from a memory (42) in order to determine deviations (ΔVm) between the vector models (Vm, S-Vm).

2. Method according to claim 1, **characterized in that** the macroscopic basic information contains at least information relating to one or more of the following quantities:
- diameter of the grinding tool (20),
- width of the grinding tool (20),
- pitch and/or slope of the grinding tool (20),
- profile angle of the grinding tool (20),
- profile thickness of the grinding tool (20),
- point radius of the grinding tool (20).

3. Method according to claim 1 or 2, **characterized in that** the 3-dimensional vector model (Vm) defines the grinding tool (20) at least by its base body (24).

4. Method according to claim 1 or 2, **characterized in that** the 3-dimensional vector model (Vm) defines the grinding tool (20) at least by edges of its base body (24).

5. Method according to one of the claims 1 to 4, **characterized in that** at least a first partial area of the grinding tool (20) is determined on the basis of the 3-dimensional vector model (Vm), in order to then set said first partial area of the grinding tool (20) in relation to a corresponding first partial area of the target vector model (S-Vm).

6. Method according to claim 5, **characterized in that** a local deviation of the first partial surface of the grinding tool (20) from the corresponding first partial surface of the target vector model (S-Vm) is calculated as a result of said setting in relation to one another.

7. Method according to one of claims 1 to 6, **characterized in that** the grinding tool (20) is a galvanically coated grinding tool, in particular a galvanic grinding wheel (20.1) or a galvanic grinding worm (20.2) or a galvanic cup wheel (20.3).

8. Method according to one of claims 1 to 7, **characterized in that** it is used in a grinding machine which is designed for grinding a workpiece with the grinding tool (20), or in a measuring device (10).

9. Apparatus (1) with a rotationally drivable receptacle (13, 14) for a grinding tool (20) to be tested, wherein the apparatus (1) comprises:
- an optical testing apparatus (30) arranged in the region of the rotationally drivable receptacle (13, 14) such that the grinding tool (20), while being rotatably driven, is at least partially irradiated by light (L) emanating from an emitter (31) of the testing apparatus (30), and that at least a portion of the light (L) from the grinding tool (20) is reflectable in the direction towards a sensor (32) of the testing apparatus (30), wherein the sensor (32) is adapted to provide test information (PI),
**characterized by**
- a computing device (40) which is designed for processing the test information (PI) in order to determine a 3-dimensional vector model (Vm) of the grinding tool (20) from macroscopic basic information (mG),
- a memory (42) in which a target vector model (S-Vm) is stored,
- a computing device (40) which is designed for comparing the vector model (Vm) with the target vector model (S-Vm) in order to enable the determination of deviations (ΔVm) between the vector models (Vm, S-Vm).

10. Apparatus (1) according to claim 9, **characterized in that** it is a coordinate measuring device (10) which is designed for testing the grinding tool (20).

11. Apparatus (1) according to claim 9, **characterized in that** it is a grinding machine (11) which is designed for grinding a workpiece with the grinding tool (20) and for testing the grinding tool (20).

## Revendications

1. Procédé pour contrôler un outil de meulage (20) dans un dispositif (1) comprenant les étapes consistant à :
- entraîner en rotation l'outil de meulage (20) autour d'un axe de broche d'outil (A1) du dispositif (1),
- réaliser une procédure de contrôle à l'aide d'un dispositif de contrôle optique (30) qui est agencé dans la zone de l'outil de meulage (20) de telle sorte que l'outil de meulage (20), pendant le processus d'entraînement en rotation, est irradié au moins partiellement par de la lumière (L) qui est émise par un émetteur (31) du dispositif de contrôle (30), et qu'au moins une partie de la lumière (L) est réfléchie par l'outil de meulage (20) en direction d'un capteur (32) du dispositif de contrôle (30), le capteur (32) fournissant des informations de contrôle (PI), **caractérisé par**:
- traiter les informations de contrôle (PI) à l'aide d'un dispositif informatique (40) pour déterminer des informations de base macroscopiques (mG) sous la forme d'un modèle vectoriel tridimensionnel (Vm) de l'outil de meulage (20),
- comparer par informatique le modèle vectoriel (Vm) avec un modèle vectoriel théorique (S-Vm) fourni par une mémoire (42) pour déterminer des écarts (ΔVm) entre les modèles vectoriels (Vm, S-Vm).

2. Procédé selon la revendication 1, **caractérisé en ce que** les informations de base macroscopiques contiennent au moins des informations concernant une ou plusieurs des grandeurs suivantes :
- le diamètre de l'outil de meulage (20),
- la largeur de l'outil de meulage (20),
- la division et/ou l'inclinaison de l'outil de meulage (20),
- l'angle de profil de l'outil de meulage (20),
- l'épaisseur de profil de l'outil de meulage (20),
- le rayon d'extrémité de l'outil de meulage (20).

3. Procédé selon la revendication 1 ou 2, **caractérisé en ce que** le modèle vectoriel tridimensionnel (Vm) définit l'outil de meulage (20) au moins par son corps de base (24).

4. Procédé selon la revendication 1 ou 2, **caractérisé en ce que** le modèle vectoriel tridimensionnel (Vm) définit l'outil de meulage (20) au moins par les bords de son corps de base (24).

5. Procédé selon l'une des revendications 1 à 4, **caractérisé en ce que**, à l'aide du modèle vectoriel tridimensionnel (Vm), il est défini au moins une première surface partielle de l'outil de meulage (20) pour mettre ensuite en relation cette première surface partielle de l'outil de meulage (20) avec une première surface partielle correspondante du modèle vectoriel théorique (S-Vm).

6. Procédé selon la revendication 5, **caractérisé en ce que** la mise en relation permet de calculer un écart local de la première surface partielle de l'outil de meulage (20) par rapport à la première surface partielle correspondante du modèle vectoriel théorique (S-Vm).

7. Procédé selon l'une des revendications 1 à 6, **caractérisé en ce que** l'outil de meulage (20) est un outil de meulage à revêtement galvanique, en particulier une meule galvanique (20.1) ou une meule à vis sans fin galvanique (20.2) ou une meule boisseau galvanique (20.3).

8. Procédé selon l'une des revendications 1 à 7, **caractérisé en ce qu'**il est prévu dans une meuleuse conçue pour traiter par frottement une pièce à usiner avec l'outil de meulage (20) ou **en ce qu'**il est utilisé dans un dispositif de mesure (10).

9. Dispositif (1) avec un logement pouvant être entraîné en rotation (13, 14) pour un outil de meulage (20) à contrôler, le dispositif (1) comprenant :
- un dispositif de contrôle optique (30) qui est agencé dans la zone du logement pouvant être entraîné en rotation (13, 14) de telle sorte que l'outil de meulage (20), pendant qu'il est entraîné en rotation, est irradié au moins partiellement par de la lumière (L) qui est émise par un émetteur (31) du dispositif de contrôle (30), et qu'au moins une partie de la lumière (L) peut être réfléchie par l'outil de meulage (20) en direction d'un capteur (32) du dispositif de contrôle (30), le capteur (32) étant conçu pour fournir des informations de contrôle (PI),
**caractérisé par** :
- un dispositif informatique (40) qui est conçu pour traiter les informations de contrôle (PI) pour déterminer, à partir d'informations de base macroscopiques (mG), un modèle vectoriel tridimensionnel (Vm) de l'outil de meulage (20),
- une mémoire (42) dans laquelle est stocké un modèle vectoriel théorique (S-Vm),
- un dispositif informatique (40) qui est conçu pour comparer le modèle vectoriel (Vm) avec le modèle vectoriel théorique (S-Vm) pour pouvoir déterminer des écarts (ΔVm) entre les modèles vectoriels (Vm, S-Vm).

10. Dispositif (1) selon la revendication 9, **caractérisé en ce qu'**il s'agit d'un dispositif de mesure de coordonnées (10) conçu pour contrôler l'outil de meulage (20).

11. Dispositif (1) selon la revendication 9, **caractérisé en ce qu'**il s'agit d'une meuleuse (11) conçue pour traiter par frottement une pièce à usiner avec l'outil de meulage (20) et pour contrôler l'outil de meulage (20).
